# Europäisches Patentamt

## European Patent Office

## Office européen des brevets

(19)

(11) Veröffentlichungsnummer: **0 168 716**
**A1**

(12)

# EUROPÄISCHE PATENTANMELDUNG

(21) Anmeldenummer: 85108230.5

(22) Anmeldetag: 03.07.85

(51) Int. Cl.⁴: **H 02 M 1/088**

(30) Priorität: 17.07.84 DE 3426768

(43) Veröffentlichungstag der Anmeldung: 22.01.86
Patentblatt 86/4

(84) Benannte Vertragsstaaten: AT CH DE FR GB IT LI SE

(71) Anmelder: Siemens Aktiengesellschaft, Berlin und München Wittelsbacherplatz 2, D-8000 München 2 (DE)

(72) Erfinder: Vukasovic, Lovro, Dipl.-Ing., Dresdener Strasse 8c, D-8520 Erlangen (DE)

(54) Schaltungsanordnung zum Betrieb von Thyristoren in einem Ventilzweig.

(57) Die Erfindung betrifft eine Schaltungsanordnung zum Betrieb mehrerer in Reihe angeordneter lichtzündbarer Thyristoren (1–5) eines Ventilzweiges mit einer erdpotentialnahen Ventilansteuervorrichtung (8) und einer ihr nachgeordneten Ansteuerlichtsignal-Übertragungsanordnung, die zur Abgabe von Lichtzündimpulsen an die Thyristoren (1–5) mehrere Leuchtdioden (20) enthält, von denen jede Leuchtdiode (20) über jeweils einen Thyristoransteuerlichtleiter (21) an jeweils einem der Thyristoren (1–5) angekoppelt ist.

Um bei einem besonders geringen Schaltungsaufwand einen zuverlässigen Betrieb der Thyristoren (1–5) des Ventilzweiges zu ermöglichen, enthält die Ansteuerlichtsignal-Übertragungsanordnung einen optoelektronischen Umsetzer (11), der in der Nähe des Ventilzweiges auf Hochspannungspotential liegt; der optoelektronische Umsetzer ist eingangsseitig über einen Ventilansteuerlichtleiter (9) mit der erdpotentialnahen Ventilansteuervorrichtung (8) verbunden, und an dem Ausgang des optoelektronischen Umsetzers (11) sind die mehreren Leuchtdioden (20) angeschlossen.

Siemens Aktiengesellschaft          Unser Zeichen
Berlin und München          VPA  **84P3268** E

Schaltungsanordnung zum Betrieb von Thyristoren in einem
Ventilzweig

Die Erfindung betrifft eine Schaltungsanordnung zum Betrieb
mehrerer in Reihe angeordneter lichtzündbarer Thyristoren
eines auf Hochspannungspotential liegenden Ventilzweiges mit
einer erdpotentialnahen Ventilansteuervorrichtung und einer
ihr nachgeordneten Ansteuerlichtsignal-Übertragungsanordnung, die zur Abgabe von Lichtzündimpulsen an die
Thyristoren mehrere Leuchtdioden enthält, von denen jede
Leuchtdiode über jeweils einen Thyristoransteuerlichtleiter
an jeweils einem der Thyristoren optisch angekoppelt ist.

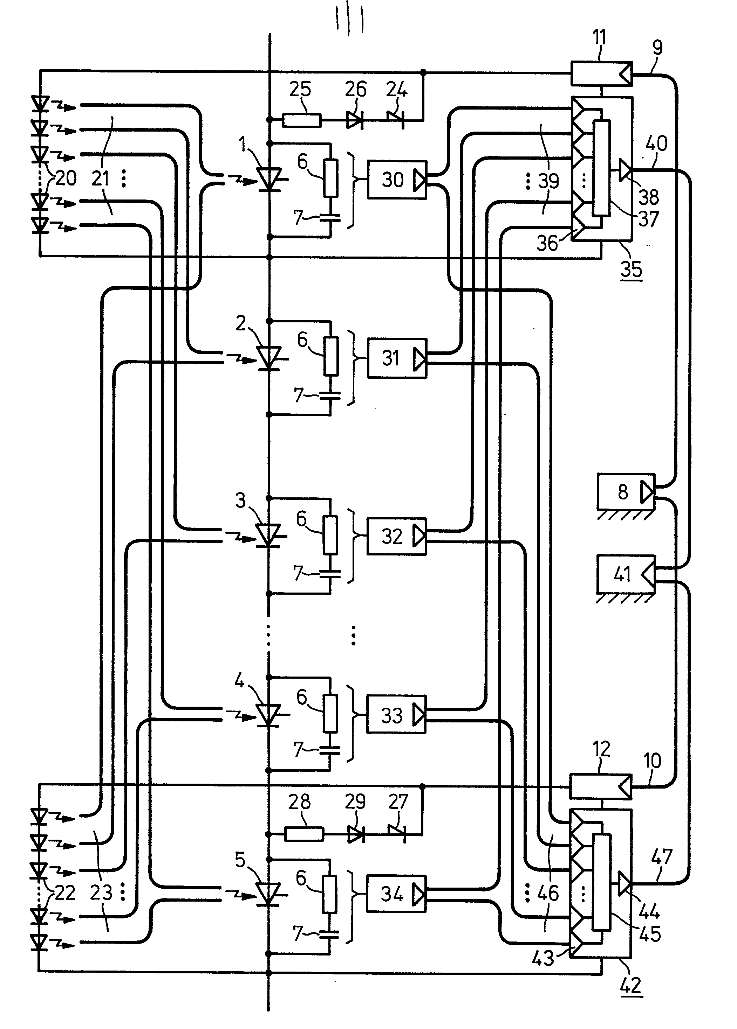

Bei einer derartigen, aus der DE-OS 33 22 873 bekannten und
dort in Figur 7 dargestellten Schaltungsanordnung ist einem
auf Hochspannungspotential liegenden Ventilzweig mit
mehreren Thyristoren eine erdpotentialnahe Ventilansteuervorrichtung zugeordnet, die über eine Ansteuerlichtsignal-
Übertragungsanordnung mit den Thyristoren verbunden ist.
Die Ventilansteuervorrichtung weist als wesentliches Teil
einen elektrischen Signalgenerator auf. Die Ansteuerlichtsignal-Übertragungsanordnung enthält erdpotentialnah mehrere
Leuchtdioden, die in Reihe mit einem Transistorschalter an
einer Gleichspannungsquelle liegen. Der Steuereingang des
Transistorschalters ist mit dem Ausgang des
elektrischen Signalgenerators über ein Logikglied verbunden.
Jede Leuchtdiode ist jeweils über einen
Thyristoransteuerlichtleiter an jeweils einem der
Thyristoren des Ventilzweiges optisch angekoppelt. Jedem
Thyristor ist zu seinem Schutz jeweils ein Schwellenspannungsschaltelement zugeordnet, das zwischen dem
Anodenanschluß und dem Kathodenanschluß des jeweiligen

Bf 3 Un / 05.07.1984

Thyristors liegt. Zur Überwachung der Thyristoren ist bei der bekannten Schaltungsanordnung jedem Thyristor des Ventilzweiges jeweils eine Thyristorüberwachungsvorrichtung mit einem ausgangsseitigen Lichtsignalsender zugeordnet. Dieser ist jeweils über einen weiteren Lichtleiter mit einem Lichtsignalempfänger einer erdpotentialnahen Ventilüberwachungsvorrichtung optisch verbunden.

Der Erfindung liegt die Aufgabe zugrunde, eine Schaltungsanordnung anzugeben, die bei einem besonders geringen Schaltungsaufwand einen zuverlässigen Betrieb der Thyristoren eines Ventilzweiges ermöglicht.

Zur Lösung dieser Aufgabe enthält bei der Schaltungsanordnung der eingangs angegebenen Art erfindungsgemäß die Ansteuerlichtsignal-Übertragungsanordnung einen optoelektronischen Umsetzer der in der Nähe des Ventilzweiges auf Hochspannungspotential liegt; der optoelektronische Umsetzer ist eingangsseitig über einen einzigen Ventilansteuerlichtleiter mit der erdpotentialnahen Ventilansteuervorrichtung verbunden, und an dem Ausgang des optoelektronischen Umsetzers sind die mehreren Leuchtdioden angeschlossen.

Ein wesentlicher Vorteil der erfindungsgemäßen Schaltungsanordnung besteht darin, daß der optoelektronische Umsetzer und die an seinem Ausgang liegenden Leuchtdioden, in denen die Lichtzündimpulse zur Zündung der Thyristoren erzeugt werden, in räumlicher Nähe zu den Thyristoren des Ventilzweiges angeordnet sind; es sind daher nur kurze Thyristoransteuerlichtleiter notwendig, um die Lichtzündimpulse an die einzelnen Thyristoren zu übertragen, so daß die Dämpfung der Lichtzündimpulse in den Thyristoransteuerlichtleitern entsprechend gering ist. Das hat den Vorteil, daß nur eine relativ geringe Lichtsendeleistung der Leuchtdioden notwendig ist, um eine sichere Zündung der Thyristoren zu gewährleisten.

Ein weiterer Vorteil der erfindungsgemäßen Schaltungsanordnung besteht darin, daß wegen der Verwendung eines einzigen optoelektronischen Umsetzers lediglich ein einziger Ventilansteuerlichtleiter zur Übertragung von Lichtimpulsen von der erdpotentialnahen Ventilansteuervorrichtung zu dem optoelektronischen Umsetzer notwendig ist. Das hat gegenüber der bekannten Schaltungsanordnung eine beträchtliche Einsparung an relativ langen, sich zwischen der erdpotentialnahen Ventilansteuervorrichtung und dem auf Hochspannungspotential liegenden Ventilzweig erstreckenden Lichtleitern zur Folge.

Bei einer vorteilhaften Weiterbildung der erfindungsgemäßen Schaltungsanordnung enthält die Ansteuerlichtsignal-Übertragungsanordnung einen weiteren optoelektronischen Umsetzer, der in der Nähe des Ventilzweiges auf Hochspannungspotential liegt; der weitere optoelektronische Umsetzer ist eingangsseitig über einen weiteren Ventilansteuerlichtleiter mit einer erdpotentialnahen Ventilansteuervorrichtung verbunden an dem Ausgang des weiteren optoelektronischen Umsetzers sind mehrere weitere Leuchtdioden angeschlossen, von denen jede weitere Leuchtdiode über jeweils einen weiteren Thyristoransteuerlichtleiter an jeweils einem der Thyristoren optisch angekoppelt ist. Mit dieser Weiterbildung der erfindungsgemäßen Schaltungsanordnung wird in vorteilhafter Weise eine redundante Ansteuerung der Thyristoren in dem Ventilzweig ermöglicht, wodurch die Zuverlässigkeit der erfindungsgemäßen Schaltungsanordnung erheblich erhöht wird.

Es ist u. a. auch aus der obengenannten Druckschrift bekannt, einem Thyristor ein Schwellenspannungsschaltelement zuzuordnen. Bei einer vorteilhaften Ausbildung der erfindungsgemäßen Schaltungsanordnung sind dabei die mehreren Leuchtdioden in Reihe mit dem Schwellen-

0168716

spannungsschaltelement zwischen dem Anodenanschluß und dem Kathodenanschluß des einen Thyristors angeordnet.

Diese Ausbildung der erfindungsgemäßen Schaltungsanordnung ermöglicht in vorteilhafter Weise eine Schutzzündung der Thyristoren des Ventilzweiges, sobald die an den Thyristoren in ihrer Durchlaßrichtung anliegende Spannung einen Schwellwert zu überschreiten droht. Ein weiterer Vorteil besteht in der Einsparung an Schaltungselementen, weil nur einem einzigen Thyristor ein derartiges Schwellenspannungsschaltungselement zugeordnet werden muß, um einen Überspannungsschutz aller Thyristoren des Ventilzweiges zu erhalten. Bei einer gleichmäßigen Aufteilung der Ventilspannung an allen Thyristoren - beispielsweise durch parallel zu jedem Thyristor liegende Bedämpfungsglieder mit einem Bedämpfungswiderstand und einem mit ihm in Reihe liegenden Bedämpfungskondensator - überwacht das Schwellenspannungsschaltelement die Spannung an dem mindestens einen Thyristor stellvertretend für die übrigen Thyristoren und bewirkt gegebenenfalls eine Schutzzündung aller Thyristoren.

Ein weiterer Vorteil der gleichzeitigen Schutzzündung aller Thyristoren besteht darin, daß der Aussteuerbereich des Ventilzweiges, also der Zeitbereich, innerhalb dessen eine Zündung der Thyristoren des Ventiles möglich ist, besonders groß ist, weil nicht unterschiedliche Toleranzen der Kippspannungen der einzelnen Schwellenspannungsschaltelement eine Einschränkung des gesamten Aussteuerbereiches des Ventilzweiges bewirken.

Die Zuverlässigkeit der erfindungsgemäßen Schaltungsanordnung läßt sich weiter erhöhen, indem einem weiteren Thyristor ein weiteres Schwellenspannungsschaltelement zugeordnet ist, wobei die mehreren weiteren Leuchtdioden in Reihe mit dem weiteren Schwellenspannungsschaltelement zwischen dem Anodenanschluß und dem Kathodenanschluß des weiteren Thyristors angeordnet sind. Auf diese Weise erfolgt nämlich eine redundante Überwachung der Thyristoren des Ventilzweiges, wodurch die Zuverlässigkeit der erfindungsgemäßen Schaltungsanordnung erhöht wird.

Zur Überwachung der Betriebszustände der Thyristoren ist jedem Thyristor jeweils eine Thyristorüberwachungsvorrichtung mit einem Lichtsignalausgang zugeordnet, die über eine Rückmeldelichtsignal-Übertragungsanordnung mit einer erdpotentialnahen Ventilüberwachungsvorrichtung verbunden ist. Bei einer vorteilhaften Ausbildung der erfindungsgemäßen Schaltungsanordnung enthält dabei die Rückmeldelichtsignal-Übertragungsanordnung einen Lichtsignalumsetzer, der in der Nähe des Ventilzweiges auf Hochspannungspotential liegt; der Lichtsignalumsetzer weist eingangsseitig mehrere Lichtsignalempfänger und ausgangsseitig einen Lichtsignalsender auf, wobei jeder Lichtsignalempfänger über jeweils einen Thyristorüberwachungslichtleiter an dem Lichtsignalausgang jeweils einer der Thyristorüberwachungsvorrichtungen optisch angekoppelt ist und der ausgangsseitige Lichtsignalsender über einen einzigen Ventilüberwachungslichtleiter mit der erdpotentialnahen Ventilüberwachungsvorrichtung optisch verbunden ist. Der Vorteil dieser Ausbildung der erfindungsgemäßen Schaltungsanordnung besteht darin, daß nur ein einziger Ventilüberwachungslichtleiter erforderlich ist, um die von den einzelnen Thyristorüberwachungsvorrichtungen ausgangsseitig abgegebenen Informationen über die Betriebszustände der Thyristoren an die erdpotentialnahe Ventilüberwachungsvorrichtung zu übertragen.

Auch hierbei läßt sich in vorteilhafter Weise zur Erhöhung der Zuverlässigkeit der erfindungsgemäßen Schaltungsanordnung eine redundante Überwachung der Thyristoren dadurch erzielen, daß die Rückmeldelichtsignal-Übertragungsanordnung einen weiteren Lichtsignalumsetzer
enthält, der in der Nähe des Ventilzweiges auf
Hochspannungspotential liegt, daß der Lichtsignalumsetzer
eingangsseitig mehrere weitere Lichtsignalempfänger und
ausgangsseitig einen weiteren Lichtsignalsender aufweist,
daß jeder weitere Lichtsignal-empfänger über jeweils einen
weiteren Thyristorüberwachungslichtleiter an dem
Lichtsignalausgang jeweils einer der Thyristorüberwachungsvorrichtungen optisch angekoppelt ist und daß der
ausgangsseitige weitere Lichtsignalsender über einen
weiteren Ventilüberwachungslichtleiter mit der
erpotentialnahen Ventilüberwachungsvorrichtung optisch
verbunden ist.

Der Lichtsignalumsetzer enthält vorteilhafterweise eine
Zeitmultiplexeinrichtung, die eingangsseitig mit den
Lichtsignalempfängern verbunden ist und an deren Ausgang der
Lichtsignalsender angeschlossen ist. Auf diese Weise werden
die von den einzelnen Thyristorüberwachungsvorrichtungen
ausgesandten Informationen über die Betriebszustände der
Thyristoren von dem Lichtsignalumsetzer parallel erfaßt und
in Form von Lichtsignalen seriell über den an dem
Lichtsignalsender des Lichtsignalumsetzers angeschlossenen
Ventilüberwachungslichtleiter an die erdpotentialnahe
Ventilüberwachungsvorrichtung übertragen.

Dementsprechend enthält bei redundanter Überwachung der
Thyristoren auch der weitere Lichtsignalumsetzer eine
weitere Zeitpultiplexeinrichtung, die eingangsseitig mit den
weiteren Lichtsignalempfängern verbunden ist und an deren
Ausgang der weitere Lichtsignalsender angeschlossen ist.

Die Stromversorgung des optoelektronischen Umsetzers bzw.
des weiteren optoelektronischen Umsetzers und auch die
Stromversorgung des Lichtsignalumsetzers bzw. des weiteren Lichtsignalumsetzers erfolgt beispielsweise durch Auskopplung der Energie aus einem Bedämpfungsglied, das einem der Thyristoren des Ventilzweiges zugeordnet ist (vgl. "etz", Heft 25, Band 102, Dez. 1981, Seite 1341, Bild 7).

Für die Ausbildung der Thyristorüberwachungsvorrichtungen bieten sich neben weiteren Möglichkeiten insbesondere die in der Patentanmeldung VPA 84 P 3270 vorgeschlagenen Schaltungsanordnungen an.

Zur Erläuterung der Erfindung ist in der Zeichnung ein bevorzugtes Ausführungsbeispiel der erfindungsgemäßen Schaltungsanordnung dargestellt.

Die Zeichnung zeigt einen auf Hochspannungspotential liegenden Ventilzweig einer nicht weiter dargestellten Stromrichteranordnung mit mehreren in Reihe liegenden lichtzündbaren Thyristoren 1 bis 5. Jedem der Thyristoren 1 bis 5 ist jeweils ein Bedämpfungsglied, bestehend aus einem Bedämpfungswiderstand 6 und einem mit diesem in Reihe liegenden Bedämpfungskondensator 7 parallel geschaltet. Die Schaltungsanordnung enthält eine erdpotentialnahe Ventilansteuervorrichtung 8 mit einem Lichtsignalausgang, der über einen Ventilansteuerlichtleiter 9 und einen weiteren Ventilansteuerlichtleiter 10 mit , einem optoelektronischen Umsetzer 1 bzw. einem weiteren optoelektronischen Umsetzer 12, als Bestandteile einer Ansteuerlichtsignal-Übertragungsanordnung zwischen der Ventilansteuervorrichtung 8 und den Thyristoren 1 bis 5 des Ventilzweiges verbunden ist. An dem Ausgang des einen optoelektronischen Umsetzers 11 sind mehrere, in Reihe angeordnete Leuchtdioden 20 angeschlossen, deren Zahl der Anzahl der Thyristoren 1 bis 5 des Ventilzweiges entspricht. Jede Leuchtdiode 20 ist jeweils über einen Thyristoransteuerlichtleiter 21 an jeweils einem der Thyristoren 1 bis 5 des Ventilzweiges optisch angekoppelt. An dem Ausgang des weiteren optoelektronischen Umsetzers 12 liegen mehrere weitere, in Reihe angeordnete Leuchtdioden 22, deren Zahl ebenfalls der Anzahl der Thyristoren 1 bis 5 entspricht. Jede weitere Leuchtdiode 22 ist jeweils über einen weiteren Thyristoransteuerlichtleiter 23 mit jeweils einem der Thyristoren 1 bis 5 auf optischem Wege verbunden. Dem mit dem Bezugszeichen 1 versehenen Thyristor ist ein Schwellenspannungsschaltelement 24 zugeordnet, das aus einer Kippspannungsdiode (Breake-Over-Diode) besteht. Die Leuchtdioden 20 am Ausgang des optoelektronischen Umsetzers 11 sind in Reihe mit diesem Schwellenspannungsschaltelement 24, einem Strombegrenzungswiderstand 25 und einer Schutzdiode 26 zwischen dem Anodenanschluß und dem Kathodenanschluß des Thyristors 1 angeschlossen. Dem mit dem Bezugszeichen 5 bezeichneten Thyristor ist ein weiteres Schwellenspannungsschaltelement 27 zugeordnet, das ebenfalls aus einer Kippspannungsdiode besteht. Die weiteren Leuchtdioden 22 am Ausgang des weiteren optoelektronischen Umsetzers 12 liegen in Reihe mit dem weiteren Schwellenspannungsschaltelement 27, einem weiteren Strombegrenzungswiderstand 28 sowie einer weiteren Schutzdiode 29 zwischen dem Anodenanschluß und dem Kathodenanschluß des Thyristors 5.

Jedem der Thyristoren 1 bis 5 des Ventilzweiges ist jeweils eine Thyristorüberwachungsvorrichtung 30 bis 34 mit jeweils einem Lichtsignalausgang zugeordnet. Die Thyristorüberwachungsvorrichtungen 30 bis 34 können beispielsweise entsprechend den in der Patentanmeldung VPA 84 P 3270 vorgeschlagenen Schaltungsanordnungen ausgebildet sein. Den Thyristorüberwachungsvorrichtungen 30 bis 34 ist ein in der Nähe des Ventilzweiges auf Hochspannungspotential liegender Lichtsignalumsetzer 35 als Bestandteil einer Rückmelde-lichtsignal-Übertragungsanordnung zugeordnet, der eingangsseitig mehrere Lichtsignalempfänger 36 aufweist, die über eine Zeitmultiplexeinrichtung 37 mit einem ausgangsseitigen Lichtsignalsender 38 in Verbindung stehen. Jeder der eingangsseitigen Lichtsignalempfänger 36 ist über jeweils einen Thyristorüberwachungslichtleiter 39 an dem
Lichtsignalausgang jeweils einer der Thyristorüberwachungsvorrichtungen 30 bis 34 optisch angekoppelt. Der
ausgangsseitige Lichtsignalsender 38 des Lichtsignalumsetzers 35 ist über einen Ventilüberwachungslichtleiter 40
mit einer erdpotentialnahen Ventilüberwachungsvorrichtung 41
auf optischem Wege verbunden. Die Schaltungsanordnung
enthält einen weiteren Lichtsignalumsetzer 42, der
eingangsseitig eine der Zahl der Thyristoren 1 bis 5
entsprechende Anzahl von weiteren Lichtsignalempfängern 43
aufweist und ausgangsseitig einen weiteren Lichtsignalsender
44 enthält. Die weiteren Lichtsignalempfänger 43 sind an den
Eingängen einer weiteren Zeitmultiplexeinrichtung 45
angeschlossen, die ausgangsseitig mit dem weiteren
Lichtsignalsender 44 verbunden ist. Jede
Thyristorüberwachungsvorrichtung 30 bis 34 ist mit ihrem
Lichtsignalausgang über jeweils einen weiteren
Thyristorüberwachungslichtleiter 46 an jeweils einem der
weiteren Lichtsignalempfänger 43 des Lichtsignalumsetzers 42
optisch angekoppelt. Der ausgangsseitige weitere
Lichtsignalsender 44 des Lichtsignalumsetzers 42 ist über
einen weiteren Ventilüberwachungslichtleiter 47 mit der
erdpotentialnahen Ventilüberwachungsvorrichtung 40 optisch
verbunden.

Zur Ansteuerung der Thyristoren 1 bis 5 des Ventilzweiges
sendet die erdpotentialnahe Ventilansteuervorrichtung 8
einen Lichtimpuls über den Ventilansteuerlichtleiter 9 an
den optoelektronischen Umsetzer 11 und parallel dazu einen
weiteren Lichtimpuls über den weiteren Ventilansteuerlichtleiter 10 an den weiteren optoelektronischen Umsetzer
12 aus. Die optoelektronischen Umsetzer 11 bzw. 12 steuern
daraufhin die ihnen ausgangsseitig nachgeordneten
Leuchtdioden 20 bzw. 22 an. Die so angesteuerten
Leuchtdioden 20 senden Lichtsignale aus, die über die
Thyristoransteuerlichtleiter 21 an die Thyristoren 1 bis 5
des Ventilzweiges übertragen werden und ihre Zündung

0168716

bewirken; gleichzeitig senden auch die weiteren Leuchtdioden 22 Lichtsignale über die weiteren Thyristoransteuerlichtleiter 23 an die Thyristoren 1 bis 5 aus und bewirken so eine redundante Zündung.

Die Bedämpfungsglieder mit den Bedämpfungskondensatoren 6 bis 10 und den Bedämpfungswiderständen 7 bewirken eine gleichmäßige Aufteilung der Ventilspannung an den Thyristoren 1 bis 5. Sobald die Spannung an dem Thyristor 1 stellvertretend für die übrigen Thyristoren 2 bis 5 des Ventilzweiges in Durchlaßrichtung einen vorgegebenen Wert überschreitet, wird das Schwellenspannungsschaltelement 24 stromleitend, so daß ein Strom durch die Leuchtdioden 20 fließt. Die Leuchtdioden 20 senden daraufhin Lichtsignale über die Thyristoransteuerlichtleiter 21 an die Thyristoren 1 bis 5 aus und bewirken so eine Schutzzündung der Thyristoren 1 bis 5. Das weitere Schwellenspannungsschaltelement 27 bewirkt auf die gleiche Weise eine redundante Schutzzündung der Thyristoren 1 bis 5 durch Ansteuerung der weiteren Leuchtdioden 22.

Die Thyristorüberwachungsvorrichtungen 30 bis 34 überwachen die Betriebszustände der ihnen zugeordneten Thyristoren 1 bis 5 und geben Rückmeldesignale in Form von Lichtimpulsen ab. Eine nähere Erläuterung der Funktionsweise der Thyristorüberwachungsvorrichtungen findet sich in der Patentanmeldung VPA 84 P 3270, in der auch die Thyristorüberwachungsvorrichtungen selbst im einzelnen beschrieben sind. Die Rückmeldesignale werden über die Thyristorüberwachungslichtleiter 39 bzw. über die weiteren Thyristorüberwachungslichtleiter 46 an den Lichtsignalumsetzer 35 bzw. den weiteren Lichtsignalumsetzer 42 übertragen. Die Lichtsignalempfänger 36 bzw. 43 der Lichtsingalumsetzer 35 bzw. 42 setzen die empfangenen Lichtimpulse in elektrische Signale um. Diese elektrischen Signale werden in der jeweiligen Zeitmultiplexeinrichtung

0168716

37 bzw. 45 in eine serielle Folge von elektrischen Signalen umgewandelt. Die seriellen elektrischen Signale werden in dem Lichtsignalsender 38 bzw. 44 in Lichtsignale umgewandelt und über den Ventilüberwachungslichtleiter 40 bzw. 47 an die nicht dargestellte Ventilüberwachungsvorrichtung übertragen und dort ausgewertet.

8 Ansprüche
1 Figur

0168716

Patentansprüche

1. Schaltungsanordnung zum Betrieb mehrerer in Reihe angeordneter lichtzündbarer Thyristoren eines auf Hochspannungspotential liegenden Ventilzweiges mit einer erdpotentialnahen Ventilansteuervorrichtung und einer ihr nachgeordneten Ansteuerlichtsignal-Übertragungsanordnung, die zur Abgabe von Lichtzündimpulsen an die Thyristoren mehrere Leuchtdioden enthält, von denen jede Leuchtdiode über jeweils einen Thyristoransteuerlichtleiter an jeweils einem der Thyristoren optisch angekoppelt ist, d a d u r c h  g e k e n n z e i c h n e t , daß die Ansteuerlichtsignal-Übertragungsanordnung einen optoelektronischen Umsetzer (11) enthält, der in der Nähe des Ventilzweiges auf Hochspannungspotential liegt, daß der optoelektronische Umsetzer (11) eingangsseitig über einen einzigen Ventilansteuerlichtleiter (9) mit der erdpotentialnahen Ventilansteuervorrichtung verbunden ist daß an dem Ausgang des optoelektronischen Umsetzers (11) die mehreren Leuchtdioden (20) angeschlossen sind.

2. Schaltungsanordnung nach Anspruch 1, d a d u r c h  g e k e n n z e i c h n e t , daß die Ansteuerlichtsignal-Übertragungsanordnung einen weiteren optoelektronischen Umsetzer (12) enthält, der in der Nähe des Ventilzweiges auf Hochspannungspotential liegt, daß der weitere optoelektronische Umsetzer (12) eingangsseitig über einen weiteren Ventilaussteuerlichtleiter (10) mit der erdpotentialnahen Ventilansteuervorrichtung verbunden ist und daß an dem Ausgang des weiteren optoelektronischen Umsetzers (12) mehrere weitere Leuchtdioden (22) angeschlossen sind, von denen jede weitere Leuchtdiode (22) über jeweils einen weiteren Thyristoransteuerlichtleiter (23) an jeweils einem der Thyristoren (1 - 5) optisch angekoppelt ist.

0168716

3. Schaltungsanordnung nach Anspruch 1 oder 2, wobei einem Thyristor (1) ein Schwellenspannungsschaltelement (24) zugeordnet ist, d a d u r c h   g e k e n n z e i c h n e t , daß die mehreren Leuchtdioden (20) in Reihe mit dem Schwellenspannungsschaltelement (24) zwischen dem Anodenanschluß und dem Kathodenanschluß des einen Thyristors (1) angeordnet sind.

4. Schaltungsanordnung nach Anspruch 3, wobei einem weiteren Thyristor (5) ein weiteres Schwellenspannungsschaltelement (27) zugeordnet ist, d a d u r c h   g e k e n n z e i c h n e t ,  daß die mehreren weiteren Leuchtdioden (22) in Reihe mit dem weiteren Schwellenspannungsschaltelement (27) zwischen dem Anodenanschluß und Kathodenanschluß des weiteren Thyristors (5) angeordnet sind.

5. Schaltungsanordnung nach einem der vorangehenden Ansprüche, wobei jedem Thyristor (1 - 5) jeweils eine Thyristorüberwachungsvorrichtung (30 - 34) mit einem Lichtsignalausgang zugeordnet ist, die über eine Rückmelde-lichtsignal-Übertragungsanordnung mit einer erdpotential-nahen Ventilüberwachungsvorrichtung (41) verbunden ist, d a d u r c h   g e k e n n z e i c h n e t ,  daß die Rückmeldelichtsignal-Übertragungsanordnung einen Lichtsignalumsetzer (35) enthält, der in der Nähe des Ventilzweiges auf Hochspannungspotential liegt, daß der Lichtsignalumsetzer (35) eingangsseitig mehrere Lichtsignalempfänger (36) und ausgangsseitig einen Lichtsignalsender (38) aufweist, daß jeder Lichtsignalempfänger (36) über jeweils einen Thyristorüberwachungslichtleiter (39) an dem Lichtsignalausgang jeweils einer der Thyristorüberwachungsvorrichtungen (30 - 34) optisch angekoppelt ist und daß der ausgangsseitige Lichtsignalsender (38) über einen einzigen Ventilüberwachungslichtleiter (40) mit der erdpotentialnahen Ventilüberwachungsvorrichtung (41) optisch verbunden ist.

0168716

6. Schaltungsanordnung nach Anspruch 5, d a d u r c h
g e k e n n z e i c h n e t , daß die Rückmeldelicht-
signal-Übertragungsanordnung einen weiteren Lichtsignalumsetzer (41) enthält, der in der Nähe des Ventilzweiges
auf Hochspannungspotential liegt, daß der weitere
Lichtsignalumsetzer (42) eingangsseitig mehrere weitere
Lichtsignalempfänger (43) und ausgangsseitig einen weiteren
Lichtsignalsender (44) aufweist, daß jeder weitere
Lichtsignalempfänger (43) über jeweils einen weiteren
Thyristorüberwachungslichtleiter (46) an dem
Lichtsignalausgang jeweils einer der Thyristorüberwachungsvorrichtungen (30 - 34) optisch angekoppelt ist und
daß der ausgangsseitige weitere Lichtsignalsender (44) über
einen weiteren Ventilüberwachungslichtleiter (47) mit der
erdpotentialnahen Ventilüberwachungsvorrichtung (41) optisch
verbunden ist.

7. Schaltungsanordnung nach Anspruch 5 oder 6,
d a d u r c h  g e k e n n z e i c h n e t ,  daß der
Lichtsignalumsetzer (35) eine Zeitmultiplexeinrichtung
(37) enthält, die eingangsseitig mit den Lichtsignalempfängern (36) verbunden ist und an deren Ausgang der
Lichtsignalsender (38) angeschlossen ist.

8. Schaltungsanordnung nach Anspruch 6 und 7, d a -
d u r c h  g e k e n n z e i c h n e t ,  daß der weitere
Lichtsignalumsetzer (42) eine weitere Zeitmultiplexeinrichtung (45) enthält, die eingangsseitig mit den
weiteren Lichtsignalempfängern (43) verbunden ist und an
deren Ausgang der weitere Lichtsignalsender (44)
angeschlossen ist.

0168716

Europäisches Patentamt

# EUROPÄISCHER RECHERCHENBERICHT

**0168716**
Nummer der Anmeldung

EP 85 10 8230

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 088 411 (TOKYO SHIBAURA) * Seite 2, Zeile 37 - Seite 4, Zeile 23 * | 1 | H 02 M 1/088 |
| | --- | | |
| A | EP-A-0 108 391 (TOKYO SHIBAURA DENKI) * Seite 3, Zeile 34 - Seite 5, Zeile 20 * | 1 | |
| | ----- | | |

| RECHERCHIERTE SACHGEBIETE (Int. Cl.4) |
|---|
| H 02 M H 03 K H 02 H |

Der vorliegende Recherchenbericht wurde für alle Patentansprüche erstellt.

| Recherchenort | Abschlußdatum der Recherche | Prüfer |
|---|---|---|
| DEN HAAG | 15-10-1985 | KERN H. |